# EUROPEAN PATENT APPLICATION

(11) **EP 0 986 022 A2**
(43) Date of publication of application: **15.03.2000**
(21) Application number: 99306778.4
(22) Date of filing: 26.08.1999
(51) Int. Cl.: G06K 11/18

(54) **A pointing stick having integral control circuitry**

(30) Priority: 09.09.1998 US 149966
(71) Applicant: CTS Corporation, Elkhart, Indiana 46514-1899 (US)
(72) Inventor: Vandenboom, Robert M., Wells, IN 46770 (US)
(74) Representative: Loven, Keith James

(57) **Abstract**

A device for generating conditioned electrical signals in response to forces applied to the device. The device includes an actuator with a substrate and a shaft having several strain sensitive resistors mounted on the shaft. The resistors generate an electrical signal representative of force applied to the shaft. The actuator is mounted on a printed circuit board. The printed circuit board has a signal conditioning means, mounted to the printed circuit board, for conditioning the electrical signal. The signal conditioning means operates to receive the electrical signal as an input and provides a conditioned signal as an output. The printed circuit board and actuator is mounted to a keyboard base.

## Description

### FIELD OF THE INVENTION

This invention generally relates to a pointing device for controlling the positioning, movement and operation of an electronic device, for example, a cursor on a display screen. Specifically, there is a shaft, a substrate, resistor based strain gages, a printed circuit board and control electronics mounted on the printed circuit board.

### CROSS REFERENCE TO RELATED AND COPENDING APPLICATIONS

The following applications are herein incorporated by reference for supportive and related teachings:

US-A-5894301 relates to a collar mounted pointing stick and has the same assignee as the present invention.

EP-A-844584 relates to a pointing stick with z-axis actuation and has the same assignee as the present invention.

EP-A-905600 relates to a unified bodied z-axis pointing stick and has the same assignee as the present invention.

EP-A-862103 relates to a z-axis pointing stick with ESD protection and has the same assignee as the present invention.

U.S. patent application identified by docket number CTS-1675 filed 5121197 relates to a pointing stick having an interposer connecting layer and has the same assignee as the present invention.

### DESCRIPTION OF THE RELATED ART

Regarding the example of a pointing device for controlling a cursor, manufacturers of portable laptop computers, recognizing the need for placing the cursor controlling device in a permanent and more convenient location, installed a small stubby, button-like joystick centrally around the keys of the computer keyboard, specifically at the juncture of the "g," "h" and "b" keys of the standard "QWERTY" keyboard. The joystick, also known as a pointing stick, was sensitive to lateral pressure, the amount and direction of which were sensed and input into the computer to cause movement of the cursor, and the speed and direction of cursor movement corresponded to the amount and direction of pressure on the joystick. That manufacturer may also provide two upwardly extending "mouse" or "click" buttons immediately below the space bar. The joystick is connected by a flexible cable to a computer mother board where it connects to several electronic circuit devices that amplify and condition the signal coming form the joystick. The signal from the joystick is a low level analog signal. Electronic devices on the mother board amplify the low level analog signal and convert it to a digital signal.

Despite the advantages of each type of prior art cursor control, none has been easily or economically manufactured. In particular, providing the electrical connections between the resistors and the circuitry on the computer mother board has been complicated and expensive. The flexible cable runs for a length along a keyboard before connecting with the motherboard.

Further, the electrical signal coming from the joystick is a low level analog signal. As the signal travels along the flexible cable it loses some of its amplitude and is skewed due to attenuation of the signal. During travel along the cable, the signal can be corrupted due to coupling from external electromagnetic interference. These problems of routing a low level analog signal along a cable can cause erroneous readings as to the position of the pointing stick. Therefore, there is a current unmet and heretofore long felt need for a pointing stick, which is easily connected and has improved signal integrity.

Examples of prior art representing the background to the present invention are as follows:
US-Re. 35,016 discloses a three-axis force measurement stylus;
US-A-5,489,900 discloses a strain sensitive columnar transducer for a data entry keyboard having a column upstanding from the keyboard;
US-A-5,473,347 discloses a computer pointing device for controlling the positioning, movement and operation of a cursor on the display screen of a computer;
US-A-5,407,285 discloses an apparatus for use in a computer keyboard for cursor control;
US-A-5,521,596 discloses a sensor device placed either underneath a key cap or a key on a keyboard or between two keys on a keyboard so that cursor movement may be carried out from the keyboard itself;
US-A-4,876,524 discloses an isometric control device or the like of the type having an elastic beam and strain gauges attached to the surface of the beam characterized by at least a first group of three strain gages each having an operative axis thereof inclined with a single predetermined angle with respect to the main axis of the beam, and the strain gauges disposed at a first predetermined level along the beam;
US-A-4,680,577 discloses a multipurpose key switch for controlling cursor movement on a CRT display and for character entry includes a key cap that moves laterally to provide cursor control and that moves vertically for character entry; and
US-A-5,659,334 discloses a force sensing pointing device.

### SUMMARY OF THE INVENTION

It is a feature of the invention to provide a pointing device for controlling the positioning, movement and operation of an electronic device, for example, a cursor on a display screen. Specifically, there is a shaft, a substrate, resistor based strain gages, a printed circuit board and control electronics mounted on the printed circuit board. The printed circuit board is mounted to a keyboard base.

It is a feature of the invention to provide a device for generating conditioned electrical signals in response to forces applied to the device. The device includes an actuator having a first end, a second end and several strain sensitive resistors mounted on the second end of the actuator for generating an electrical signal representative of force applied to the shaft. A printed circuit board has the actuator mounted thereto. The printed circuit board has a signal conditioning means, mounted to the printed circuit board, for conditioning the electrical signal. The signal conditioning means operates to receive the electrical signal as an input and provides a conditioned signal as an output. An electrical connection means is disposed between the printed circuit board and the actuator, for electrically routing the electrical signal to the printed circuit board. A keyboard base has the printed circuit board and actuator mounted thereto.

It is a further feature of the invention to provide the keyboard base with an aperture and the first end of the actuator extends through the keyboard aperture.

It is a further feature of the invention to provide the conditioned signal on at least one terminal mounted on the printed circuit board.

It is a further feature of the invention to receive the electrical signal in an analog state from the actuator and output the conditioned signal in a digital state.

It is a further feature of the invention to place the strain sensitive resistors on a shaft of the actuator.

There has thus been outlined, rather broadly, the more important features of the invention so that the detailed description thereof that follows may be better understood and so that the present contribution to the art may be better appreciated. There are, of course, additional features of the invention that will be described hereinafter and which will form the subject matter of the appended claims. Those skilled in the art will appreciate that the preferred embodiment may readily be used as a basis for the designing of other structures, methods and systems for carrying out the several purposes of the present invention. It is important, therefore, that the claims are regarded as including such equivalent constructions since they do not depart from the scope of the present invention.

### BRIEF DESCRIPTION OF THE DRAWINGS

Fig. 1 is a perspective exploded view of the pointing stick with integral control circuitry.

Fig. 2 is a cross-sectional view of the pointing stick of Figure 1 and control circuitry mounted on a keyboard using a mounting bracket.

Fig. 3 is a cross-sectional view showing mounting details of the pointing stick in the substrate.

Fig. 4 is a perspective view of a keyboard with the pointing stick.

Fig. 5 is a view of a computer system and the pointing stick mounted on a keyboard.

It is noted that the drawings of the invention are not to scale. The drawings are merely schematic representations, not intended to portray specific parameters of the invention. The drawings are intended to depict only typical embodiments of the invention and therefore should not be considered as limiting the scope of the invention. The invention will be described with additional specificity and detail through the accompanying drawings. The description of the invention may contain, for example, such descriptive terms as up, down, top, bottom, right or left. These terms are meant to provide a general orientation of the parts of the invention and are not meant to be limiting as to the scope of the invention.

### DETAILED DESCRIPTION OF THE PREFERRED EMBODIMENT

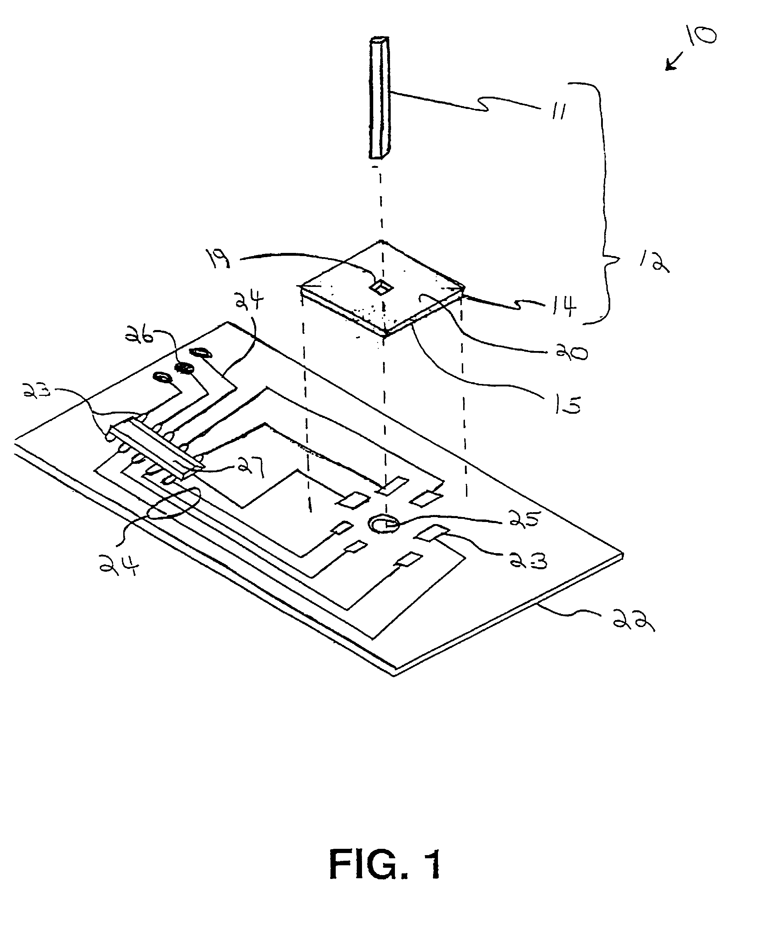

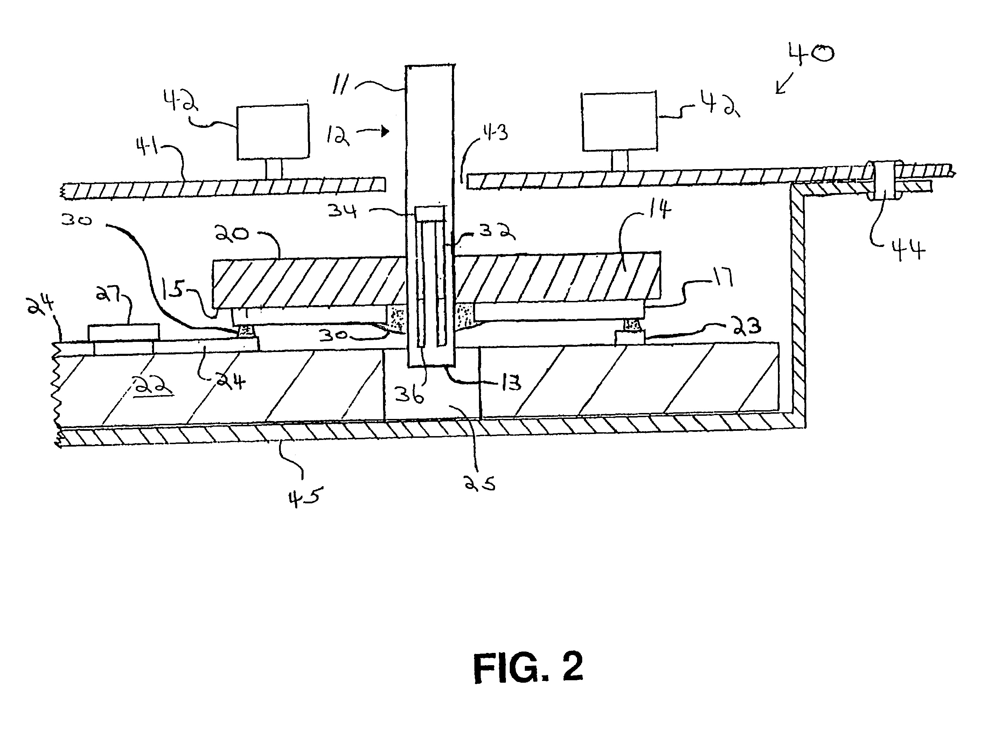

Referring to both Figures 1 and 2, there is a pointing stick with integral control circuitry assembly 10 that can be used to control the movement of a cursor on a computer screen. In particular, pointing stick assembly 10 has a stick or shaft 11 and a first substrate 14 attached to shaft 11. The stick is preferably made out of ceramic. The first substrate 14 is preferably a flex cable, printed circuit board, polyamide sheet or ceramic. Shaft 11 and substrate 14 make up actuator 12. Shaft 11 extends through a substrate bore 19. Several strain gauge resistors 33, bridge 34 and conductors 36 are screen printed and cured, using conventional thick film resistor processing techniques, onto a side of shaft 11. Substrate 14 also has a top surface 20 and a bottom surface 15. Substrate 14 has disposed on bottom surface 15 electrically conductive circuit lines 17.

A printed circuit board or second substrate 22 has several electrical contacts 23 and circuit lines 24 extending from the contacts 23. Contacts 23 are connected to the lines 17 by conventional electronic interconnection techniques such as using a solder joint 30. Similarly, conductors 36 are connected to another end of circuit line 17 by another solder joint 30. Contacts 23 further connect with a signal processing or conditioning circuit device 27 on printed circuit board 22 via circuit lines 24. The signal processing device 27 is a conventional pointing stick electronic signal processing device. One such device is known as TrackPoint (tm) and is commercially available from Phillips Electronics Semiconductor Division. Several terminals 26 are provided to connect from printed circuit board 22 to an external electrical circuit such as a computer motherboard. Terminals 26 are connected to the circuit device 27 through contacts 23 and circuit lines 24. Printed circuit board 22 has a printed circuit board bore 25 extending therethrough. Shaft 11 may be fastened into the substrate bore 19 by gluing, press-fitting or swaging, for example. The shaft 11 may or may not extend into printed circuit board bore 25. Circuit bore 25 may be omitted if the shaft does not extend far enough.

Figure 2 shows a partial cross-sectional view of pointing stick assembly 10 mounted on a keyboard. Keyboard assembly 40 is a representation of a keyboard. Assembly 40 has a keyboard base 41, keys 42, and keyboard aperture 43. Pointing stick 10 is mounted to keyboard 40 with a mounting bracket 45. Shaft 11 extends through keyboard aperture 43 and between keys 42. Mounting bracket 45 is attached to keyboard base 41 by conventional fasteners such as rivet 44. The pointing stick assembly 10 is supported and contained by bracket 45 below the keyboard base 41. The shaft has an end 13 that may or may not extend beyond bottom surface 15. Figure 2 also shows details of the electrical connection between the substrate 14 and the printed circuit board 22. Solder 30 forms an electrical connection between pads 17 and contacts 23.

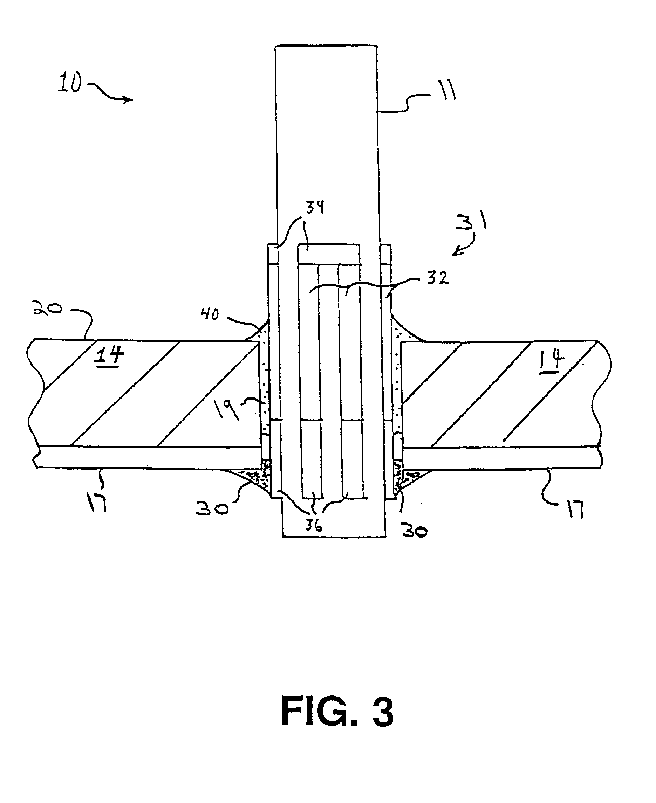

Referring to Fig. 3, there is a cross-sectional view taken through substrate 14 showing mounting details of shaft 11 to substrate 14. In particular, the following additional elements are illustrated: Strain gages 31 are mounted on the sides of the stick 11 and are made of pressure sensitive resistors or strips 32, for electrically changing the resistance of the material in response to the amount of strain applied thereto, a conductive contact bridge 34 for electrically connecting the two resistors or strips 32, and conductors 36 for making electrical contact to circuit lines 17. The stick 11 extends through hole 19, and is held in place by an adhesive bond epoxy 40. For example, a cyanoacrylate adhesive material is also suitable. Conductors 36 are electrically connected to circuit lines 17 by solder joints 30. The pointing stick assembly 10 can be assembled as follows: The first step usually involves either the screening of resistive thick film or the sputtering of resistive thin film material and conductors 36 and bridge 34 on the sides of stick 11. The screened on material forms the strain gages 31. The second step often involves the placement of the stick 11 into the substrate 14 (or base). At this stage, a certain amount of bonding material 40 is applied onto the substrate 14 to secure the stick 11 to the substrate 14. Next, the solder 30 may be placed around the stick 11 to attach all eight conductors 36 to all eight circuit lines 17, two on each side of the stick 11. Finally, the whole assembly is cured to harden the bonding materials.

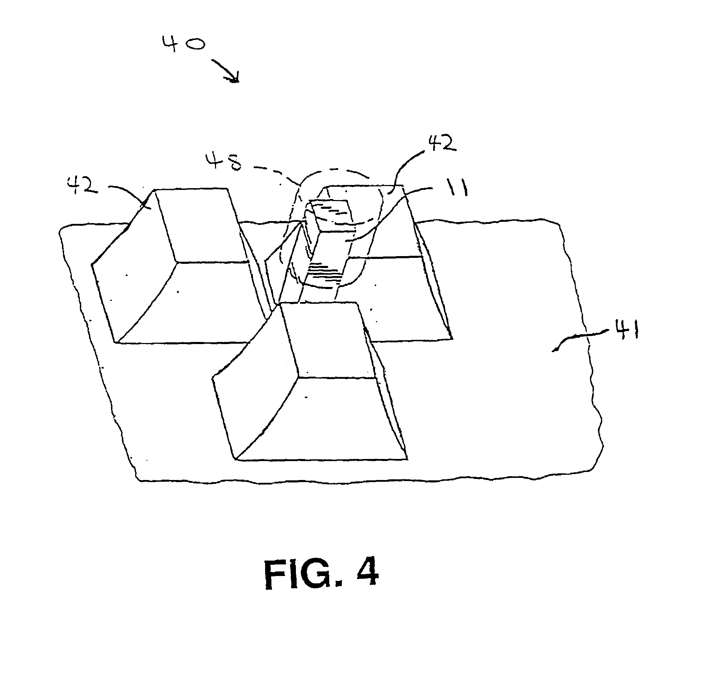

Figure 4 shows a keyboard base 41 with the shaft 11 extending upwardly between keys 42. A rubber cap 48 is shown in phantom. The cap 48 may or may not be placed over shaft 11 to improve the ergonomics or feel for the user.

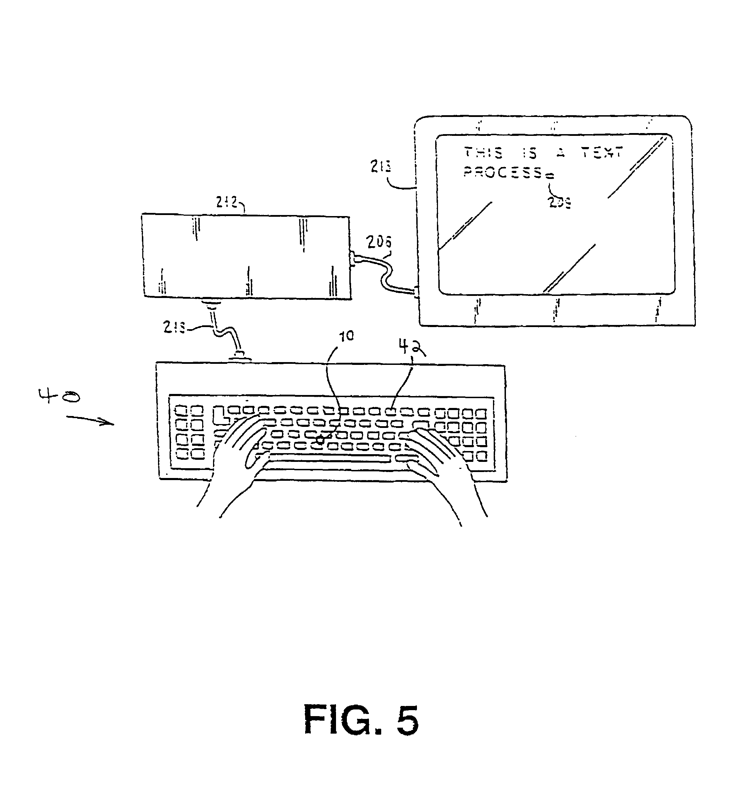

Figure 5 shows a computer system and a keyboard assembly 40 with pointing stick assembly 10. Pointing stick 10 is located between keys 42. Keyboard 40 is electrically connected to computer 212 by cable 218. Computer 206 is electrically connected to monitor 213 by cable 206. Monitor 213 has a cursor 209 on the screen. Pointing stick assembly 10 allows a user to control the position of cursor 209 on monitor 213.

When a user moves shaft 11, forces exerted on the shaft are translated to substrate 14 and to resistors 32 causing the resistors to change their resistance value. Signal conditioning device 27 supplies a low level voltage through resistors 32. The change in resistance value is received by signal conditioning device 27 as an analog signal. The signal conditioning device changes the analog signal into a digital signal to be outputed on terminals 26 to another electrical circuit or mouse input (not shown).

The assembly is completed by attaching the pointing stick to printed circuit board 22. Printed circuit board 22 may or may not have been previously populated with the electronic components necessary for signal conditioning. Solder, in paste form, is screened onto conductors 23 and substrate 14 is placed on top of printed circuit board 22 and is then run through a reflow furnace where the solder melts and connects lines 17 to conductors 23. Hot bar soldering could also be used to connect lines 17 to conductors 23. The assembly 10 is placed into bracket 45 and shaft 11 is inserted through keyboard base bore 43. Keyboard assembly 40 is completed by attaching bracket 45 to keyboard base 41 by fasteners 44.

### Variations of the Preferred Embodiment(s)

One of ordinary skill in the art of making pointing sticks or other electronic controls such as remote controls, will realize that there are many different ways of accomplishing the preferred embodiment. For example, although shaft 11 and substrate 14 were shown as separate pieces, they could be one piece.

It is further possible to have printed circuitry board 22 be another material such as a ceramic or a flexible film. Additionally, substrate 14 could be made from ceramic. Even though only one layer of circuit lines 24 are shown, it is possible to have a multi layer circuit board. It is further possible to have additional signal processing devices or circuitry 27 mounted on circuit board 22.

Keyboard 40 is a representation of a keyboard and can be most any multilayered keyboard design.

Even though the specification has shown the pointing stick assembly 10 disposed below keyboard base 41, with shaft 11 extending upwardly, it is considered equivalent to have pointing stick assembly 10 disposed on the top of the keyboard base 41 and positioned below the keys 42. Further, assembly 10 could be placed in a cutout region in base 41.

The specification has shown the pointing stick assembly 10 mounted to a keyboard base 41, it is contemplated, however, to mount the pointing stick assembly to other types of bases or structures like remote control devices or joysticks.

Another variation of the preferred embodiment is to use other types of fasteners to hold the control assembly 10 to the keyboard besides rivet 44 such as glue, press fitting, a retainer with holding tabs or a separate bracket.

The shaft 11 may extend down into the printed circuit board hole 25 normally or may extend into the hole 25 during depression of the shaft 11.

The circuit lines 17 could be located on the top surface of the substrate 14 along with conductors 36 being above the substrate 14. Vias or plated thru holes could be used to electrically connect circuit lines 17 to the conductors 23.

The shaft 11 has been shown having four sides with two strain gauge resistors on each. It is contemplated that other shaped shafts could be used such as hexagonal or octagonal with resistors disposed on one or more sides if it is desired to sense other axes of motion.

Additionally, shaft 11 could be integral to substrate 14 forming a unitary piece.

While the invention has been taught with specific reference to these embodiments, someone skilled in the art will recognize that changes can be made in form and detail without departing from the scope of the invention. The described embodiments are to be considered in all respects only as illustrative and not restrictive.

## Claims

1. A device for generating electrical signals in response to forces applied thereto, comprising:
a) an actuator having force sensing means outputting an electrical signal representative of a force applied thereto;
b) a support mounting the actuator and carrying signal conditioning means for receiving the electrical signal from the force sensing means and for outputting a conditioned signal; and
c) electrical connection means on the support between the force sensing means and the signal conducting means.

2. A device according to Claim 1, wherein the signal conditioning means is arranged to receive an analogue signal from the force sensing means and to output a digital signal.

3. A device according to Claim 1 or 2, wherein the force sensing means comprises at least one strain sensitive resistor mounted on the actuator for generating an electrical signal representative of force applied to the actuator, and wherein the actuator and the signal conditioning means are mounted on a printed circuit board.

4. A device according to Claim 3, wherein the actuator has a plurality of strain sensitive resistors mounted thereon.

5. A device according to any preceding claim, wherein the printed circuit board is held by a mounting bracket.

6. A device according to any preceding claim, wherein the actuator has an attached shaft.

7. A device according to Claim 6, wherein the mounting bracket is adapted to connect with a keyboard base which has an aperture and an end of the shaft extends through the keyboard aperture.

8. A device according to Claim 6 or 7, wherein the actuator comprises a substrate, to which one end of the shaft is attached.

9. A device according to any preceding claim, wherein the device outputs the conditioned signal on at least one terminal mounted on the support.

10. A device according to Claim 3, 4 or 5, wherein the actuator has a shaft, having a first and second end, a substrate having the first end of the shaft attached thereto, at least one strain sensitive resistor mounted on the shaft for generating an electrical signal representative of a magnitude and direction of force applied to the shaft by a user, at least one circuit line disposed on the substrate and electrically connected to the resistor, and wherein, the electrical connection means are mounted between the substrate and the printed circuit board, for electrically routing the electrical signal from the circuit line through the electrical connection means and to the electrical conductor.

11. A device according to Claim 10, wherein the substrate has a bore passing therethrough, the first end of the shaft being mounted in the substrate bore.

12. A device according to Claim 10 or 11, wherein the electrical connection means is solder.

13. An electronic control device for allowing a user to control the movement or operation of a responsive electronic system comprising:
a) a base; and
b) signal conditioning means, mounted to the base, for generating a digital electrical signal representative of a direction of mechanical forces applied thereon by a user.
